# EUROPEAN PATENT APPLICATION

(11) **EP 4 726 713 A1**
(43) Date of publication of application: **15.04.2026**
(21) Application number: 24846064.4
(22) Date of filing: 25.07.2024
(51) Int. Cl.: G10L 15/22, G10L 15/04, G10L 15/183, G06F 3/16, G06F 16/334, G06F 40/30

(54) **ELECTRONIC DEVICES AND METHODS OF PROCESSING USER UTTERANCES**

(30) Priority: 26.07.2023 KR 20230097621; 06.10.2023 KR 20230133152
(71) Applicant: Samsung Electronics Co., Ltd., Suwon-si, Gyeonggi-do 16677 (KR)
(72) Inventor: PARK, Sangmin, Suwon-si Gyeonggi-do 16677 (KR); SONG, Gajin, Suwon-si Gyeonggi-do 16677 (KR); KIM, Kyungtae, Suwon-si Gyeonggi-do 16677 (KR)
(74) Representative: HGF
(86) International application number: PCT/KR2024/010829
(87) International publication number: WO 2025/023762

(57) **Abstract**

An electronic device according to an embodiment is provided. The electronic device may comprise a memory for storing one or more computer programs. The electronic device may include one or more processors communicatively coupled to the memory. The one or more computer programs may include computer-executable instructions, The computer-executable instructions may be executed by the one or more processors to instruct the electronic device to receive a user's utterance, The computer-executable instructions may be executed by the one or more processors to instruct the electronic device to analyze the bias of the utterance or the bias of the user. The computer-executable instructions may be executed by the one or more processors to instruct the electronic device to generate a response including biased information on the basis of the result of analyzing bias in the utterance or the result of analyzing bias in the user. The computer-executable instructions may be executed by the one or more processors to instruct the electronic device to provide the response to the user.

## Description

### Technical Field

The disclosure relates to an electronic device and a method of processing a user utterance.

### Description of Related Art

An electronic device equipped with a voice assistant function of providing a service based on a user utterance is provided in various ways. The electronic device may use an artificial intelligence (AI) server to recognize an utterance of a user and analyze the meaning and intent of the utterance. The AI server may infer the intent of the user by interpreting the utterance of the user and perform tasks based on the inferred intent. The AI server may perform the task according to the intent of the user represented through a natural language interaction between the user and the AI server.

When the AI server provides a response to a user based on a voice assistant function, prejudice and discrimination that may be included in the responses are sensitive topics. Therefore, most language model-based question-answering systems are designed to remove any bias that may be included in answers.

The above information is presented as background information only to assist with an understanding of the disclosure. No determination has been made, and no assertion is made, as to whether any of the above might be applicable as prior art with regard to the disclosure.

### Disclosure of the Invention

### Technical Solutions

Aspects of the disclosure are to address at least the above-mentioned problems and/or disadvantages and to provide at least the advantages described below. Accordingly, an aspect of the disclosure is to provide an electronic device and a method of processing a user utterance.

Additional aspects will be set forth in part in the description which follows and, in part, will be apparent from the description, or may be learned by practice of the presented embodiments.

In accordance with an aspect of the disclosure, an electronic device is provided. The electronic device includes memory storing one or more computer programs. The electronic device includes one or more processors communicatively coupled to the memory. The one or more computer programs include computer-executable instructions. The computer-executable instructions, when executed by the one or more processors, may cause the electronic device to receive an utterance of a user. The computer-executable instructions, when executed by the one or more processors, may cause the electronic device to analyze a bias of the utterance or a bias of the user. The computer-executable instructions, when executed by the one or more processors, may cause the electronic device to generate a response including biased information, based on an analysis result of the bias of the utterance or an analysis result of the bias of the user. The computer-executable instructions, when executed by the one or more processors, may cause the electronic device to provide the response to the user.

In accordance with another aspect of the disclosure, a method of operating an electronic device is provided. The method includes receiving an utterance of a user. The method includes analyzing a bias of the utterance or a bias of the user. The method includes generating a response including biased information, based on an analysis result of the bias of the utterance or an analysis result of the bias of the user. The method includes providing the response to the user.

In accordance with another aspect of the disclosure, an electronic device is provided. The electronic device includes memory storing one or more computer programs. The electronic device includes one or more processors communicatively coupled to the memory. The one or more computer programs include computer-executable instructions. The computer-executable instructions, when executed by the one or more processors, may cause the electronic device to receive an utterance of a user. The computer-executable instructions, when executed by the one or more processors, may cause the electronic device to generate a response including biased information, based on the utterance. The computer-executable instructions, when executed by the one or more processors, may cause the electronic device to generate information about a bias of the response based on the response. The computer-executable instructions, when executed by the one or more processors, may cause the electronic device to provide the response and the information about the bias together to the user.

In accordance with another aspect of the disclosure, a method of operating an electronic device is provided. The method includes receiving an utterance of a user. The method includes generating a response including biased information, based on the utterance. The method includes generating information about a bias of the response based on the response. The method includes providing the response and the information about the bias together to the user.

In accordance with another aspect of the disclosure, an electronic device is provided. The electronic device includes memory storing one or more computer programs. The electronic device includes one or more processors communicatively coupled to the memory. The one or more computer programs include computer-executable instructions. The computer-executable instructions, when executed by the one or more processors, may cause the electronic device to receive an utterance of a user. The computer-executable instructions, when executed by the one or more processors, may cause the electronic device to obtain first information about a bias of the utterance or second information about a bias of the user. The computer-executable instructions, when executed by the one or more processors, may cause the electronic device to generate a prompt based on the first information or the second information. The computer-executable instructions, when executed by the one or more processors, may cause the electronic device to generate a response including biased information from the prompt, based on a general language model or a biased language model. The computer-executable instructions, when executed by the one or more processors, may cause the electronic device to provide the response to the user.

In accordance with another aspect of the disclosure, a method of operating an electronic device is provided. The method includes receiving an utterance of a user. The method includes obtaining first information about a bias of the utterance or second information about a bias of the user. The method includes generating a prompt based on the first information or the second information. The method includes generating a response including biased information from the prompt, based on a general language model or a biased language model. The method includes providing the response to the user.

In accordance with another aspect of the disclosure, one or more non-transitory computer-readable storage media storing one or more computer programs including computer-executable instructions that, when executed by one or more processors of an electronic device, cause the electronic device to perform operations, are provided. The operations include receiving an utterance of a user. The operations include analyzing a bias of the utterance or a bias of the user. The operations include generating a response comprising biased information, based on an analysis result of the bias of the utterance or an analysis result of the bias of the user. The operations include providing the response to the user.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF THE DRAWINGS

FIG. 1 is a block diagram illustrating an electronic device in a network environment according to an embodiment of the disclosure;
FIG. 2 is a block diagram illustrating an integrated intelligence system according to an embodiment of the disclosure;
FIG. 3 is a diagram illustrating a form in which relationship information between concepts and actions is stored in a database (DB) according to an embodiment of the disclosure;
FIG. 4 is a diagram illustrating a screen of an electronic device processing a received voice input through an intelligent app according to an embodiment of the disclosure;
FIG. 5 is a diagram illustrating an operation of an electronic device to process an utterance of a user according to an embodiment of the disclosure;
FIG. 6 is a block diagram schematically illustrating an electronic device according to an embodiment of the disclosure;
FIG. 7 is a diagram illustrating information about a bias according to an embodiment of the disclosure;
FIGS. 8, 9, 10, 11, and 12 are diagrams illustrating examples of an operation of an electronic device to process a user utterance according to various embodiments of the disclosure; and
FIG. 13 is a flowchart illustrating a method of operating an electronic device according to an embodiment.

The same reference numerals are used to represent the same elements throughout the drawings.

### DETAILED DESCRIPTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth^{®} chip, a global positioning system (GPS) chip, a near field communication (NFC) chip, connectivity chips, a sensor controller, a touch controller, a finger-print sensor controller, a display driver integrated circuit (IC), an audio CODEC chip, a universal serial bus (USB) controller, a camera controller, an image processing IC, a microprocessor unit (MPU), a system on chip (SoC), an IC, or the like.

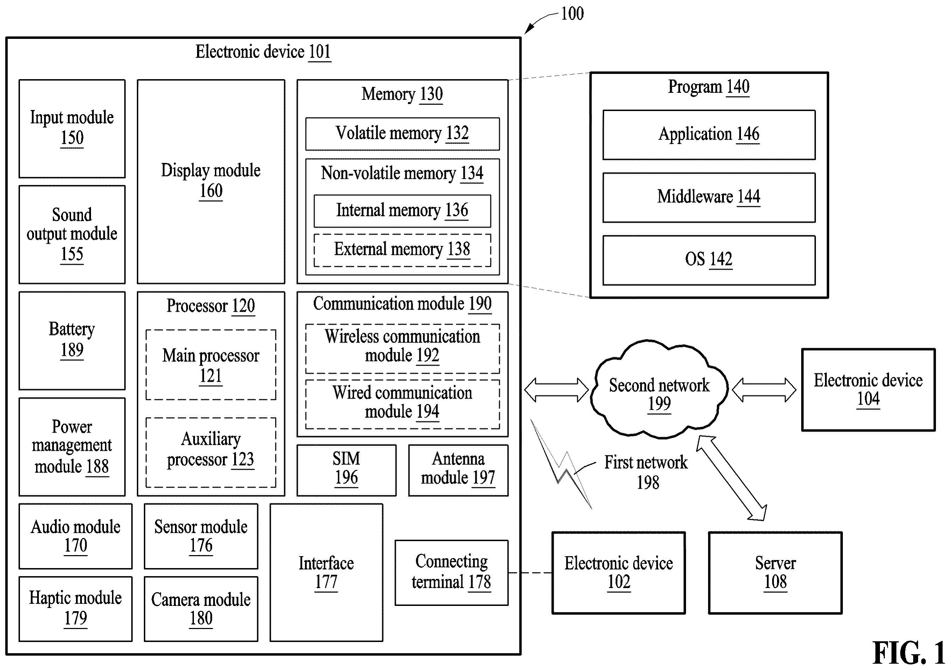

FIG. 1 is a block diagram illustrating an electronic device in a network environment according to an embodiment of the disclosure. Referring to FIG. 1, an electronic device 101 in a network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to yet another embodiment, as at least a part of data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to yet another embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to yet another embodiment, the auxiliary processor 123 (e.g., an ISP or a CP) may be implemented as a portion of another component (e.g., the camera module 180 or the communication module 190) that is functionally related to the auxiliary processor 123. According to yet another embodiment, the auxiliary processor 123 (e.g., an NPU) may include a hardware structure specified for artificial intelligence model processing. An artificial intelligence model may be generated through machine learning. Such learning may be performed, for example, by the electronic device 101 in which an artificial intelligence model is executed, or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The artificial intelligence model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a record. The receiver may be used to receive an incoming call. According to yet another embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to yet another embodiment, the display module 160 may include a touch sensor adapted to sense a touch, or a pressure sensor adapted to measure the intensity of force incurred by the touch.

The audio module 170 may convert a sound into an electrical signal or vice versa. According to yet another embodiment, the audio module 170 may obtain the sound via the input module 150 or output the sound via the sound output module 155 or an external electronic device (e.g., the electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to yet another embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to yet another embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to yet another embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to yet another embodiment, the haptic module 179 may include, for example, a motor, a piezoelectric element, or an electric stimulator.

The camera module 180 may capture a still image and moving images. According to yet another embodiment, the camera module 180 may include one or more lenses, image sensors, ISPs, or flashes.

The power management module 188 may manage power supplied to the electronic device 101. According to an example, the power management module 188 may be implemented as, for example, at least a part of a power management integrated circuit (PMIC).

The battery 189 may supply power to at least one component of the electronic device 101. According to yet another embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support a direct (e.g., wired) communication or a wireless communication. According to yet another embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., a LAN or a wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a fourth generation (4G) network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a millimeter wave (mmWave) band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to yet another embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to yet another embodiment, the antenna module 197 may include an antenna including a radiating element including a conductive material or a conductive pattern formed in or on a substrate (e.g., a printed circuit board (PCB)). According to yet another embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to yet another embodiment, another component (e.g., a radio frequency integrated circuit (RFIC)) other than the radiating element may be additionally formed as a part of the antenna module 197.

According to yet another embodiment, the antenna module 197 may form a mmWave antenna module. According to yet another embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to yet another embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to yet another embodiment, all or some of operations to be executed at the electronic device 101 may be executed at one or more external electronic devices (e.g., the external electronic devices 102 and 104, or the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To this end, cloud computing, distributed computing, mobile edge computing (MEC), or client-server computing technology may be used, for example. The electronic device 101 may provide ultra low-latency services using, e.g., distributed computing or MEC. In an embodiment, the external electronic device 104 may include an Internet-of-things (IoT) device. The server 108 may be an intelligent server using machine learning and/or a neural network. According to yet another embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

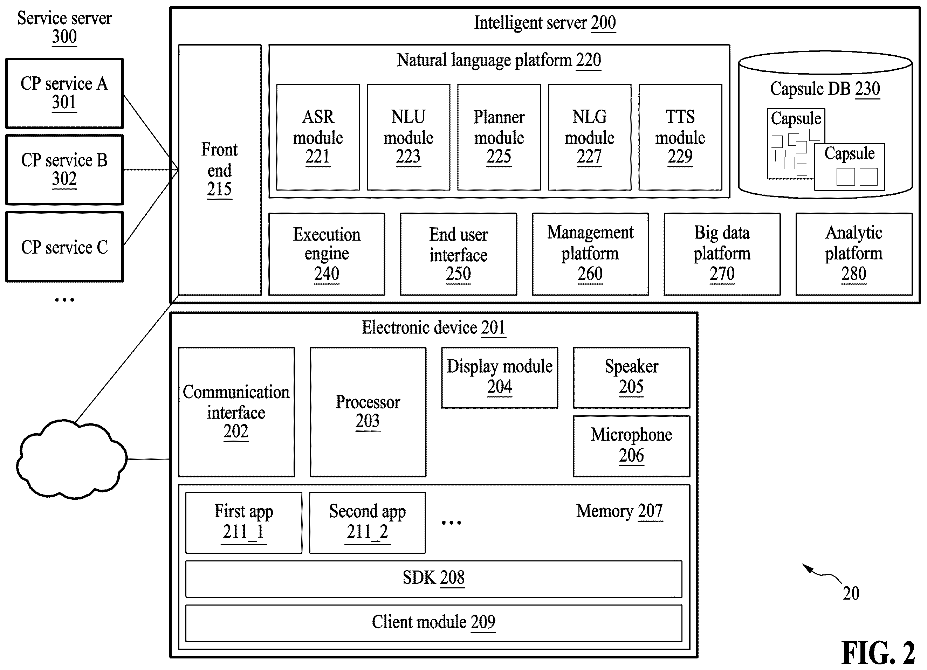

FIG. 2 is a block diagram illustrating an integrated intelligence system according to an embodiment of the disclosure.

Referring to FIG. 2, an integrated intelligence system 20 according to an embodiment may include an electronic device 201 (e.g., the electronic device 101 of FIG. 1), an intelligent server 200 (e.g., the server 108 of FIG. 1), and a service server 300 (e.g., the server 108 of FIG. 1).

The electronic device 201 according to an embodiment may be a terminal device (or an electronic device) connectable to the Internet, and may be, for example, a mobile phone, a smartphone, a personal digital assistant (PDA), a notebook computer, a television (TV), a white home appliance, a wearable device, a head-mounted display (HMD), or a smart speaker.

According to the shown embodiment, the electronic device 201 may include a communication interface 202 (e.g., the interface 177 of FIG. 1), a microphone 206 (e.g., the input module 150 of FIG. 1), a speaker 205 (e.g., the sound output module 155 of FIG. 1), a display module 204 (e.g., the display module 160 of FIG. 1), memory 207 (e.g., the memory 130 of FIG. 1), or a processor 203 (e.g., the processor 120 of FIG. 1). The components listed above may be operationally or electrically connected to each other.

The communication interface 202 according to an embodiment may be connected to an external device and configured to transmit and receive data to and from the external device. The microphone 206 according to an embodiment may receive a sound (e.g., a user utterance) and convert the sound into an electrical signal. The speaker 205 according to an embodiment may output the electrical signal as a sound (e.g., a speech).

The display module 204 according to an embodiment may be configured to display an image or video. The display module 204 according to an embodiment may also display a graphical user interface (GUI) of an app (or an application program) being executed. The display module 204 according to an embodiment may receive a touch input through a touch sensor. For example, the display module 204 may receive a text input through a touch sensor in an on-screen keyboard area displayed in the display module 204.

The memory 207 according to an embodiment may store a client module 209, a software development kit (SDK) 208, and a plurality of apps 211. The client module 209 and the SDK 208 may configure a framework (or a solution program) for performing general-purpose functions. In addition, the client module 209 or the SDK 208 may configure a framework for processing a user input (e.g., a voice input, a text input, or a touch input).

The plurality of apps stored in the memory 207 according to an embodiment may be programs for performing designated functions. According to yet another embodiment, the plurality of apps may include a first app 211_1, and a second app 211_2. According to yet another embodiment, each of the plurality of apps may include a plurality of actions for performing a designated function. For example, the apps may include an alarm app, a messaging app, and/or a scheduling app. According to yet another embodiment, the plurality of apps may be executed by the processor 203 to sequentially execute at least a portion of the plurality of actions.

The processor 203 according to an embodiment may control the overall operation of the electronic device 201. For example, the processor 203 may be electrically connected to the communication interface 202, the microphone 206, the speaker 205, and the display module 204 to perform a designated operation.

The processor 203 according to an embodiment may also perform the designated function by executing the program stored in the memory 207. For example, the processor 203 may execute at least one of the client module 209 or the SDK 208 to perform the following operation for processing a user input. The processor 203 may control the actions of the plurality of apps through, for example, the SDK 208. The following operation which is the operation of the client module 209 or the SDK 208 may be performed by the processor 203.

The client module 209 according to an embodiment may receive a user input. For example, the client module 209 may receive a voice signal corresponding to a user utterance sensed through the microphone 206. As another example, the client module 209 may receive a touch input sensed through the display module 204. As still another example, the client module 209 may receive a text input sensed through a keyboard or an on-screen keyboard. In addition, the client module 209 may receive various types of user inputs sensed through an input module included in the electronic device 201 or an input module connected to the electronic device 201. The client module 209 may transmit the received user input to the intelligent server 200. The client module 209 may transmit state information of the electronic device 201 together with the received user input to the intelligent server 200. The state information may be, for example, execution state information of an app.

The client module 209 according to an embodiment may receive a result corresponding to the received user input. For example, when the intelligent server 200 is capable of calculating a result corresponding to the received user input, the client module 209 may receive the result corresponding to the received user input. The client module 209 may display the received result on the display module 204. Further, the client module 209 may output the received result in an audio form through the speaker 205.

The client module 209 according to an embodiment may receive a plan corresponding to the received user input. The client module 209 may display results of executing a plurality of actions of an app according to the plan on the display module 204. For example, the client module 209 may sequentially display the results of executing the plurality of actions on the display module 204 and output the results in an audio form through the speaker 205. As another example, the electronic device 201 may display only a portion of the results of executing the plurality of actions (e.g., a result of the last action) on the display module 204 and output the portion of the results in an audio form through the speaker 205.

According to yet another embodiment, the client module 209 may receive a request for obtaining information necessary for calculating a result corresponding to the user input from the intelligent server 200. According to yet another embodiment, the client module 209 may transmit the necessary information to the intelligent server 200 in response to the request.

The client module 209 according to an embodiment may transmit information on the results of executing the plurality of actions according to the plan to the intelligent server 200. The intelligent server 200 may confirm that the received user input has been correctly processed using the information on the results.

The client module 209 according to an embodiment may include a speech recognition module. According to yet another embodiment, the client module 209 may recognize a voice input for performing a limited function through the speech recognition module. For example, the client module 209 may execute an intelligent app for processing a voice input to perform an organic operation through a designated input (e.g., Wake up!).

The intelligent server 200 according to an embodiment may receive information related to a user voice input from the electronic device 201 through a communication network. According to yet another embodiment, the intelligent server 200 may change data related to the received voice input to text data. According to yet another embodiment, the intelligent server 200 may generate a plan for performing a task corresponding to the user voice input based on the text data.

According to yet another embodiment, the plan may be generated by an artificial intelligence (AI) system. The AI system may be a rule-based system, or a neural network-based system (e.g., a feedforward neural network (FNN) or a recurrent neural network (RNN)). Alternatively, the AI system may be a combination of the above-described systems or other AI systems. According to yet another embodiment, the plan may be selected from a set of pre-defined plans or may be generated in real time in response to a user request. For example, the AI system may select at least one plan from the pre-defined plans.

The intelligent server 200 according to an embodiment may transmit a result according to the generated plan to the electronic device 201 or transmit the generated plan to the electronic device 201. According to yet another embodiment, the electronic device 201 may display the result according to the plan on the display module 204. According to yet another embodiment, the electronic device 201 may display a result of executing an action according to the plan on the display module 204.

The intelligent server 200 according to an embodiment may include a front end 215, a natural language platform 220, a capsule database (DB) 230, an execution engine 240, an end user interface 250, a management platform 260, a big data platform 270, or an analytic platform 280.

The front end 215 according to an embodiment may receive the received user input from the electronic device 201. The front end 215 may transmit a response corresponding to the user input.

According to yet another embodiment, the natural language platform 220 may include an automatic speech recognition (ASR) module 221, a natural language understanding (NLU) module 223, a planner module 225, a natural language generator (NLG) module 227, or a text-to-speech (TTS) module 229.

The ASR module 221 according to an embodiment may convert data related to the voice input received from the electronic device 201 into text data. The NLU module 223 according to an embodiment may determine a domain (and/or intent information) corresponding to a voice input (e.g., a user utterance) based on the text data of the voice input. The domain may correspond to a category (or a service) associated with an action (or a function) that the user intends to execute using a device. The domain may be classified based on a text-related service (e.g., an app). For example, a Gracenote domain may correspond to a music search service (e.g., a Gracenote^{™} service). A Melon domain may correspond to a music streaming service (e.g., Melon^{™} service). The domain may be associated with intent information corresponding to text. The NLU module 223 according to an embodiment may discern a user intent using the text data of the voice input. For example, the NLU module 223 may discern an intent of a user by performing syntactic analysis or semantic analysis on a user input in the form of text data. The NLU module 223 according to an embodiment may discern a meaning of a word extracted from the user input using a linguistic feature (e.g., a grammatical element) of a morpheme or a phrase, and may determine the intent of the user by matching the discerned meaning of the word to an intent. The NLU module 223 may obtain intent information corresponding to a user utterance. The intent information may be information indicating an intention of the user determined through an analysis of the text data. The intent information may include information indicating an action or function that the user intends to execute using a device. A slot may be detailed information associated with intent information. A slot may be obtained based on a domain corresponding to an utterance. A slot may be variable information necessary to perform an action. In an embodiment, variable information constituting a slot may include a named entity.

The planner module 225 according to an embodiment may generate a plan using a parameter and the intent determined by the NLU module 223. According to yet another embodiment, the planner module 225 may determine a plurality of domains required to perform a task based on the determined intent. The planner module 225 may determine a plurality of actions included in each of the plurality of domains determined based on the intent. According to yet another embodiment, the planner module 225 may determine a parameter required to execute the determined plurality of actions, or a result value output by the execution of the plurality of actions. The parameter, and the result value may be defined as a concept of a designated form (or class). Accordingly, the plan may include a plurality of actions and a plurality of concepts determined by the intent of the user. The planner module 225 may determine relationships between the plurality of actions and the plurality of concepts stepwise (or hierarchically). For example, the planner module 225 may determine an execution order of the plurality of actions determined based on the intent of the user, based on the plurality of concepts. In other words, the planner module 225 may determine the execution order of the plurality of actions based on the parameter required for the execution of the plurality of actions and results output by the execution of the plurality of actions. Accordingly, the planner module 225 may generate a plan including connection information (e.g., ontology) on connections between the plurality of actions and the plurality of concepts. The planner module 225 may generate the plan using information stored in the capsule DB 230 that stores a set of relationships between concepts and actions.

The NLG module 227 according to an embodiment may change designated information to a text form. The information changed to the text form may be in the form of a natural language utterance. The TTS module 229 according to an embodiment may change information in a text form to information in a speech form.

According to yet another embodiment, some or all of the functions of the natural language platform 220 may be implemented in the electronic device 201 as well.

The capsule DB 230 may store information on the relationships between the plurality of concepts and actions corresponding to the plurality of domains. A capsule according to an embodiment may include a plurality of action objects (or action information) and concept objects (or concept information) included in the plan. According to yet another embodiment, the capsule DB 230 may store a plurality of capsules in the form of a concept action network (CAN). According to yet another embodiment, the plurality of capsules may be stored in a function registry included in the capsule DB 230.

The capsule DB 230 may include a strategy registry that stores strategy information necessary for determining a plan corresponding to a voice input. The strategy information may include reference information for determining one plan when a plurality of plans corresponding to the voice input are present. According to yet another embodiment, the capsule DB 230 may include a follow-up registry that stores information on follow-up actions for suggesting a follow-up action to the user in a designated situation. The follow-up action may include, for example, a follow-up utterance. According to yet another embodiment, the capsule DB 230 may include a layout registry that stores layout information that is information output through the electronic device 201. According to yet another embodiment, the capsule DB 230 may include a vocabulary registry that stores vocabulary information included in capsule information. According to yet another embodiment, the capsule DB 230 may include a dialog registry that stores information on a dialog (or an interaction) with a user. The capsule DB 230 may update the stored objects through a developer tool. The developer tool may include, for example, a function editor for updating an action object or a concept object. The developer tool may include a vocabulary editor for updating a vocabulary. The developer tool may include a strategy editor for generating and registering a strategy for determining a plan. The developer tool may include a dialog editor for generating a dialog with a user. The developer tool may include a follow-up editor capable of activating a subsequent goal and editing a subsequent utterance that provides hints. The subsequent goal may be determined based on a currently configured goal, a preference of a user, or environmental conditions. In an embodiment, the capsule DB 230 may also be implemented in the electronic device 201.

The execution engine 240 according to an embodiment may calculate a result using the generated plan. The end user interface 250 may transmit the calculated result to the electronic device 201. Accordingly, the electronic device 201 may receive the result and provide the received result to the user. The management platform 260 according to an embodiment may manage information used in the intelligent server 200. The big data platform 270 according to an embodiment may collect data of the user. The analytic platform 280 according to an embodiment may manage a quality of service (QoS) of the intelligent server 200. For example, the analytic platform 280 may manage the components and processing rate (or efficiency) of the intelligent server 200.

The service server 300 according to an embodiment may provide a designated service (e.g., food order or hotel reservation) to the electronic device 201. According to yet another embodiment, the service server 300 may be a server operated by a third party. Services of the service server 300, such as a CP service A 301 and a CP service B 302, may interact with the front end 215 of the intelligent server 200. The service server 300 according to an embodiment may provide information used to generate a plan corresponding to the received user input to the intelligent server 200. The provided information may be stored in the capsule DB 230. In addition, the service server 300 may provide result information according to the plan to the intelligent server 200.

In the integrated intelligence system 20 described above, the electronic device 201 may provide various intelligent services to the user in response to a user input. The user input may include, for example, an input through a physical button, a touch input, or a voice input.

In an embodiment, the electronic device 201 may provide a speech recognition service through an intelligent app (or a speech recognition app) stored therein. In this case, for example, the electronic device 201 may recognize a user utterance or a voice input received through the microphone, and provide a service corresponding to the recognized voice input to the user.

In an embodiment, the electronic device 201 may perform a designated action alone or together with the intelligent server 200 and/or the service server 300, based on the received voice input. For example, the electronic device 201 may execute an app corresponding to the received voice input and perform a designated action through the executed app.

In an embodiment, when the electronic device 201 provides a service together with the intelligent server 200 and/or the service server 300, the electronic device 201 may detect a user utterance using the microphone 206 and generate a signal (or voice data) corresponding to the detected user utterance. The electronic device 201 may transmit the voice data to the intelligent server 200 using the communication interface 202.

The intelligent server 200 according to an embodiment may generate, as a response to the voice input received from the electronic device 201, a plan for performing a task corresponding to the voice input or a result of performing an action according to the plan. The plan may include, for example, a plurality of actions for performing a task corresponding to a voice input of a user, and a plurality of concepts related to the plurality of actions. The concepts may be defined as parameters that are input for execution of the plurality of actions or result values that are output by execution of the plurality of actions. The plan may include connection information on connections between the plurality of actions and the plurality of concepts.

The electronic device 201 according to an embodiment may receive the response using the communication interface 202. The electronic device 201 may output a voice signal generated inside the electronic device 201 to the outside using the speaker 205, or may output an image generated inside the electronic device 201 to the outside using the display module 204.

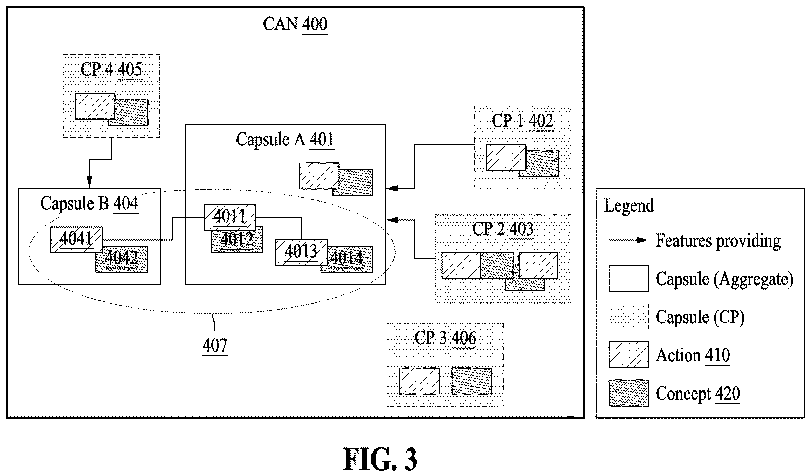

FIG. 3 is a diagram illustrating a form in which relationship information on relationships between concepts and actions is stored in a DB according to an embodiment of the disclosure.

A capsule DB (e.g., the capsule DB 230 of FIG. 2) of an intelligent server (e.g., the intelligent server 200 of FIG. 2) may store capsules in the form of a CAN 400. The capsule DB may store an action for processing a task corresponding to a voice input of a user and a parameter necessary for the action in the form of a CAN.

The capsule DB may store a plurality of capsules (a capsule A 401 and a capsule B 404) respectively corresponding to a plurality of domains. According to yet another embodiment, one capsule (e.g., the capsule A 401) may correspond to one domain (e.g., a location (geo) or an application). In addition, the one capsule may correspond to at least one service provider (e.g., CP 1 402 or CP 2 403) for performing a function for a domain related to the capsule. According to yet another embodiment, one capsule may include at least one action 410 and at least one concept 420 to perform a designated function. The CAN 400 may store other information, for example, CP 3 406. In addition, the capsule B 404 may correspond to a service provider (e.g., CP 4 405).

A natural language platform (e.g., the natural language platform 220 of FIG. 2) may generate a plan for performing a task corresponding to the received voice input using the capsules stored in the capsule DB. For example, a planner module (e.g., the planner module 225 of FIG. 2) of the natural language platform may generate a plan using the capsules stored in the capsule DB. For example, a plan 407 may be generated using actions 4011 and 4013 and concepts 4012 and 4014 of the capsule A 401 and an action 4041 and a concept 4042 of the capsule B 404.

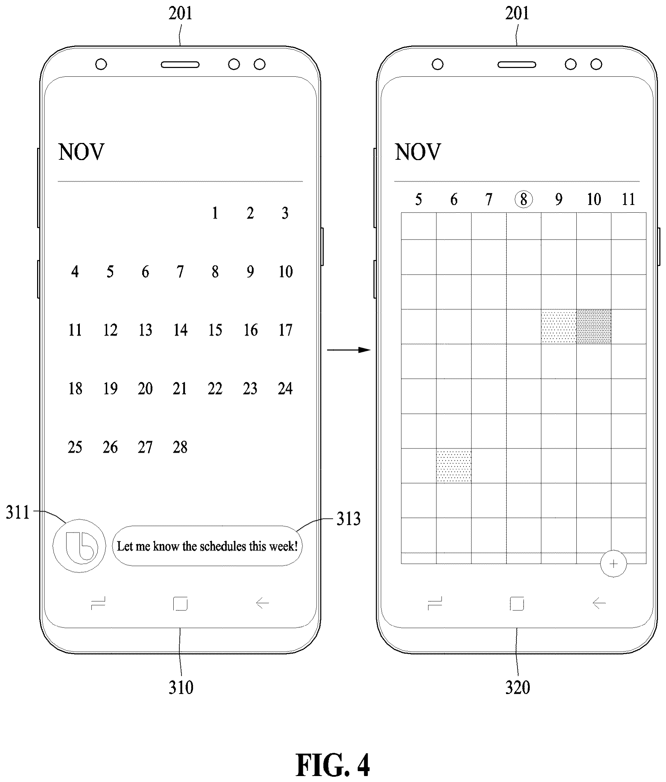

FIG. 4 is a diagram illustrating a screen of an electronic device processing a received voice input through an intelligent app according to an embodiment of the disclosure.

An electronic device 201 may execute an intelligent app to process a user input through an intelligent server (e.g., the intelligent server 200 of FIG. 2).

According to yet another embodiment, on a screen 310, when a designated voice input (e.g., Wake up!) is recognized or an input through a hardware key (e.g., a dedicated hardware key) is received, the electronic device 201 may execute an intelligent app for processing the voice input. The electronic device 201 may execute the intelligent app, for example, in a state in which a scheduling app is executed. According to yet another embodiment, the electronic device 201 may display an object (e.g., an icon) 311 corresponding to the intelligent app on the display module 204 (e.g., the display module 160 of FIG. 1). According to yet another embodiment, the electronic device 201 may receive a voice input by a user utterance. For example, the electronic device 201 may receive a voice input of "Let me know the schedules this week!". According to yet another embodiment, the electronic device 201 may display a user interface (UI) 313 (e.g., an input window) of the intelligent app in which text data of the received voice input is displayed on the display module 204.

According to yet another embodiment, on a screen 320, the electronic device 201 may display a result corresponding to the received voice input on the display module 204. For example, the electronic device 201 may receive a plan corresponding to the received user input, and display "the schedules this week" on the display module 204 according to the plan.

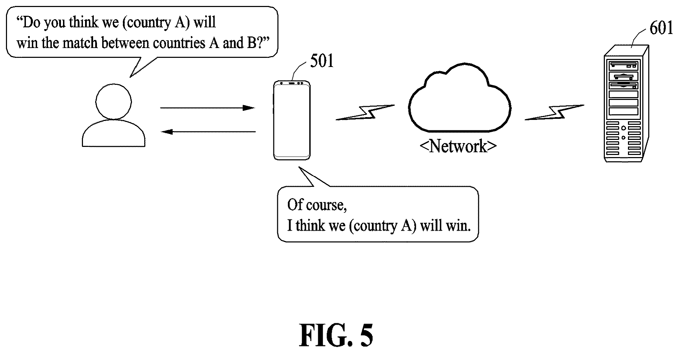

FIG. 5 is a diagram illustrating an operation of an electronic device to process an utterance of a user according to an embodiment of the disclosure.

Referring to FIG. 5, an electronic device 501 may include at least some components of the electronic device 101 described with reference to FIG. 1 and the electronic device 201 described with reference to FIG. 2. An intelligent server 601 may include at least some components of the intelligent server 200 described with reference to FIG. 2. With respect to the electronic device 501 and the intelligent server 601, repeated descriptions provided with reference to FIGS. 1 to 4 are omitted.

The electronic device 501 (e.g., the electronic device 101 of FIG. 1 or the electronic device 201 of FIG. 2) may be connected to the intelligent server 601 (e.g., the intelligent server 200 of FIG. 2) via a LAN, a WAN, a value-added network (VAN), a mobile radio communication network, a satellite communication network, or any combination thereof. The electronic device 501 and the intelligent server 601 may communicate with each other through a wired communication method or a wireless communication method (e.g., a wireless LAN (Wi-Fi), Bluetooth, Bluetooth low energy, ZigBee, Wi-Fi Direct (WFD), ultra-wideband (UWB), infrared data association (IrDA), and near-field communication (NFC)).

According to yet another embodiment, the electronic device 501 may be implemented as at least one of a smartphone, a tablet personal computer (PC), a mobile phone, a speaker (e.g., an AI speaker), a video phone, an e-book reader, a desktop PC, a laptop PC, a netbook computer, a workstation, a server, a PDA, a portable multimedia player (PMP), an MP3 player, a mobile medical device, a camera, or a wearable device.

According to yet another embodiment, the electronic device 501 may obtain a voice signal corresponding to an utterance of a user and may transmit the voice signal to the intelligent server 601. The intelligent server 601 may obtain text data corresponding to the utterance of the user based on the voice signal. The text data may be obtained by converting a voice part into computer-readable text by performing ASR on the voice signal. The intelligent server 601 may analyze the utterance of the user using the text data. The intelligent server 601 may perform a required function using an analysis result (e.g., intent information, an entity, and/or a capsule) or may provide a response (e.g., a question and an answer) to be provided to a user to a device (e.g., the electronic device 501). The intelligent server 601 may be implemented as software. Some or all of the intelligent server 601 may be implemented in the electronic device 501 and/or the intelligent server 601 (e.g., the intelligent server 200 of FIG. 2). On-device AI for processing an utterance without communication with the intelligent server 601 may be installed in the electronic device 501. Components, such as the natural language platform 220 described with reference to FIGS. 2 to 4, may be implemented in the electronic device 501.

According to yet another embodiment, the ASR module 221 included in the natural language platform 220 of FIG. 2 may convert a user utterance into text data. The NLU module 223 included in the natural language platform 220 may determine a domain (and/or intent information) corresponding to the user utterance based on the text data corresponding to the user utterance. The electronic device 501 may provide a response corresponding to the user utterance based on intent information.

According to yet another embodiment, the electronic device 501 may provide a user with a response including biased information. By providing a biased response, the electronic device 501 may interact with the user interactively in association with various issues. The electronic device 501 that provides the biased response may enhance a user experience in terms of diversity.

According to yet another embodiment, the electronic device 501 may also provide information about a bias of the response when providing the response. The information about the bias of the response (and/or information about a bias of the entire conversation), together with the response, may be provided to the user, so that the user may perceive that the response of the electronic device 501 is biased. The electronic device 501 may guarantee an objectivity of the response.

According to yet another embodiment, biased information may be information affected by personal opinions, prejudices, or deliberate intentions to promote a predetermined point of view. The biased information may be information including distorted content. The biased information may be information that deviates from fair and balanced representations of facts or perspectives. A bias of Information may be represented in various forms, such as, political, ideological, cultural or personal biases, and the like. According to embodiments of the disclosure, the term "bias" is not limited to the dictionary meanings thereof. The bias may correspond to characteristics including sensationalism, violence, and incitement to hatred. In other words, the biased information may correspond to information about a target that needs to be filtered but is not filtered. According to embodiments of the disclosure, the term "bias" may encompass representations equivalent to the above description. A degree of bias included in a response may not deviate from typical ethical notions. For example, if friendly settings for a specific country are performed, a response (e.g., "A specific country has better scenery than other countries, so it is a good place to live") may be provided to a user, however, a response (e.g., a response including a socially problematic bias (e.g., "People of the specific country are a superior race worthy of conquering the world.")) may not be provided to the user. The bias may include statistical results that are systematically distorted due to unacceptable factors in derivation of the statistical results. The bias may be allowed to operate in a predetermined range. The bias may include a bias for or against one topic in comparison to another topic, a person, or a group.

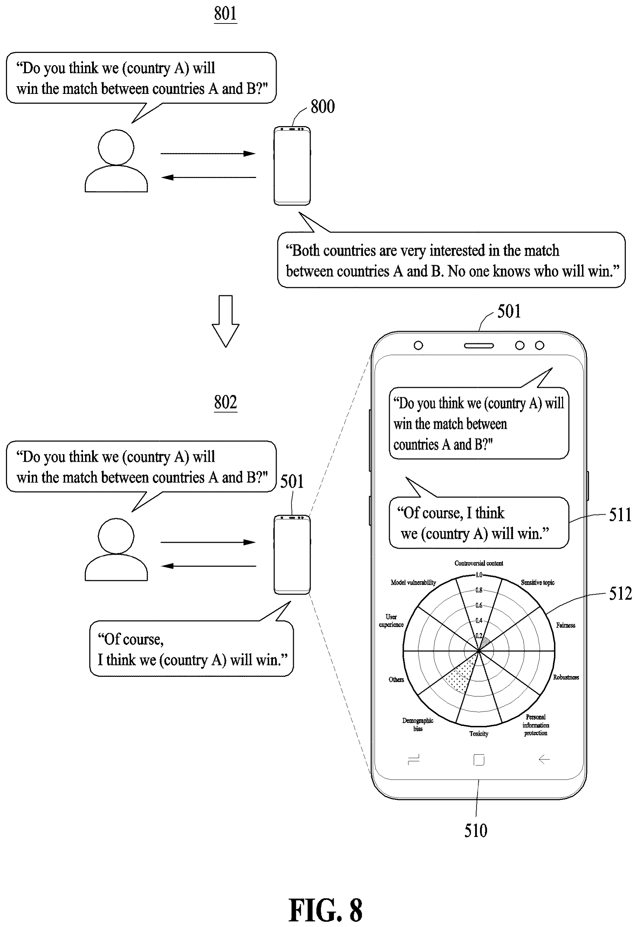

Referring to FIG. 5, an electronic device 501 may receive an utterance (e.g., "Do you think we (country A) will win the match between countries A and B?") from the user. The utterance (e.g., "Do you think we (country A) will win the match between countries A and B?") may be an utterance with a bias (e.g., "we (country A)" corresponding to the nationality of the user). The electronic device 501 may generate a response including biased information (e.g., "Of course, I think we (country A) will win") based on the utterance. The electronic device 501 may provide the user with the response including the biased information (e.g., "Of course, I think we (country A) will win"). The electronic device 501 may also provide the user with information about a bias of the response, when providing the response (e.g., "Of course, I think we (country A) will win") (e.g., see FIG. 8). The electronic device 501 may enhance a user experience in terms of diversity.

According to yet another embodiment, at least a portion of operations performed by the electronic device 501 may be performed by the electronic device 501 and/or the intelligent server 601. Hereinafter, a description is provided based on an assumption that the electronic device 501 performs the operations.

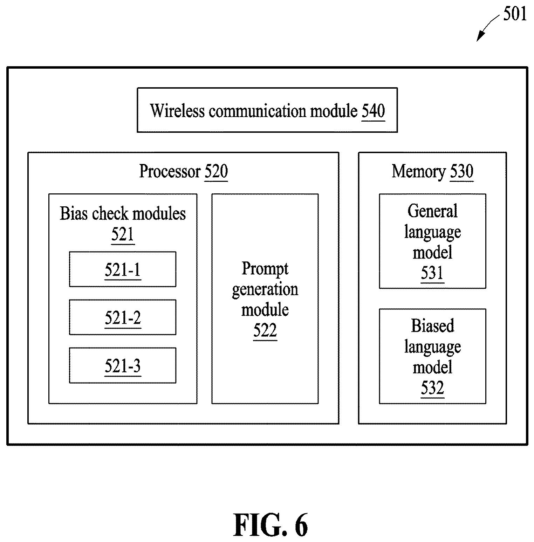

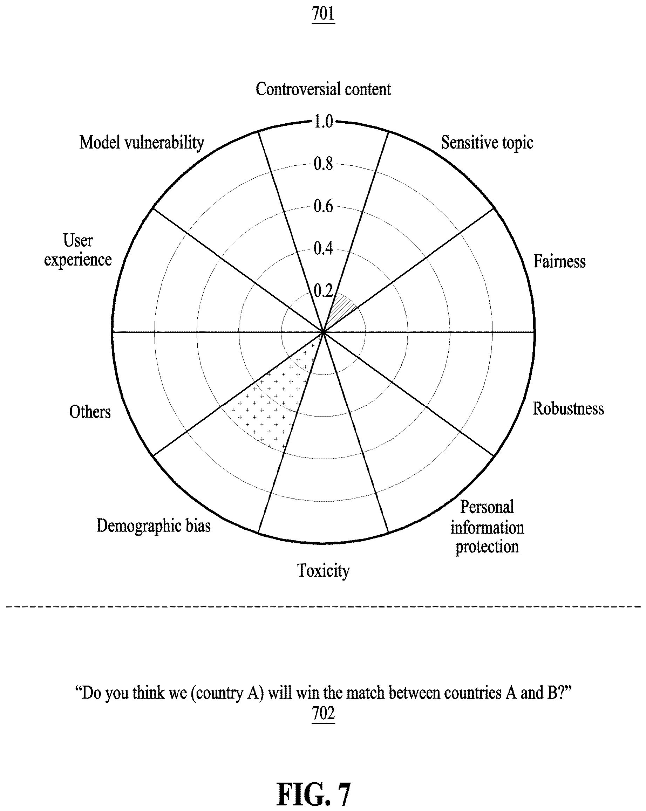

FIG. 6 is a block diagram schematically illustrating an electronic device according to an embodiment of the disclosure, and FIG. 7 is a diagram illustrating information about a bias according to an embodiment of the disclosure.

Referring to FIG. 6, an electronic device 501 may include at least a portion of configurations of an electronic device 101 described above with reference to FIG. 1 and the electronic device 201 described above with reference to FIG. 2. As described above, on-device AI for processing an utterance without communication with an intelligent server (e.g., the intelligent server 200 of FIG. 2 or the intelligent server 601 of FIG. 5) may be installed in the electronic device 501. In other words, the natural language platform 220 described with reference to FIGS. 2 to 4 may be implemented in the electronic device 501. With respect to the electronic device 501, repeated descriptions provided with reference to FIGS. 1 to 4 are omitted.

According to yet another embodiment, the electronic device 501 may include a wireless communication module 540 (e.g., the wireless communication module 192 of FIG. 1). The electronic device 501 may include a processor 520 (e.g., the processor 120 of FIG. 1, and the processor 203 of FIG. 2). The electronic device 501 may include memory 530 (e.g., the memory 130 of FIG. 1, and the memory 207 of FIG. 2). The processor 520 (e.g., an AP) may execute instructions by accessing the memory 530. The processor 520 may cause the electronic device 501 to provide a response to the user. The memory 530 may store a variety of data used by at least one component (e.g., the processor 520) of the electronic device 501. The memory 530 may store a general language model 531, and a biased language model 532.

According to yet another embodiment, the electronic device 501 may receive an utterance of the user. The user may perform an utterance with a bias. The user may desire to receive a biased response provided in response to his or her utterance and may also perform a user setting associated with the bias.

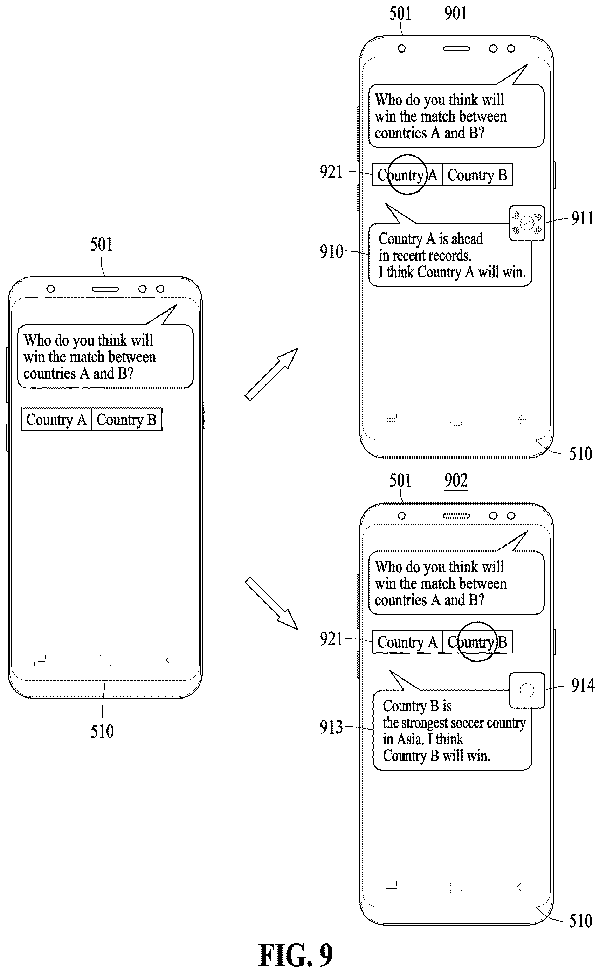

According to yet another embodiment, the electronic device 501 may obtain an analysis result of the bias of the utterance (e.g., first information about the bias of the utterance), using a bias check module 521-1. The electronic device 501 may obtain an analysis result of a bias of the user (e.g., second information about the bias of the user), using a bias check module 521-2. The first information about the bias of the utterance may include a bias category of the utterance and/or a degree of bias of the utterance. The second information about the bias of the user may correspond to a setting of the user associated with the bias. The second information about the bias of the user may be obtained based on a bias setting UI (for example, a bias setting UI 921 of FIG. 9) displayed by the electronic device 501.

According to yet another embodiment, the bias check module 521-1 may be trained based on a corpus labeled with the bias category and the degree of bias. The bias check module 521-1 may analyze (e.g., determine) the bias of the utterance based on the corpus that is training data. The corpus may be a criterion for determining the bias of the utterance. The bias check module 521-1 may analyze (e.g., determine) the bias of the utterance based on an association (e.g., a similarity) between the corpus and the utterance. The bias check module 521-1 may generate the analysis result of the bias of the utterance (e.g., the first information about the bias of the utterance).

Referring to FIG. 7, an example of the first information about the bias of the utterance may be identified. Information 701 about a bias may correspond to an utterance 702. Bias categories may include a demographic bias (e.g., a racial bias, a gender bias, an age bias, and a country bias), toxicity (e.g., words, phrases, and sentences that may be inappropriate or offensive), private information protection (e.g., privacy issues), robustness, fairness (e.g., equal opportunities and equal treatment for diverse groups), a sensitive topic, controversial content, and a model vulnerability (e.g., an aggressive input to a voice assistant model), a user experience, and others. As described above with reference to FIG. 5, according to embodiments of the disclosure, the term "bias" is not limited to the dictionary meanings thereof. In other words, the biased information may correspond to information about a target that needs to be filtered but is not filtered. According to embodiments of the disclosure, the term "bias" may encompass representations equivalent to the above description.

According to yet another embodiment, the utterance 702 may include a demographic bias (e.g., a national bias) and a sensitive topic (e.g., hooligan issues). The information 701 about the bias may include degrees of bias for each bias category (e.g., the demographic bias of "0.6", and the sensitive topic of "0.2").

According to yet another embodiment, the bias check module 521-2 may call a setting value of a user (e.g., the analysis result of the bias of the user (e.g., the second information about the bias of the user)). The second information about the bias of the user may correspond to a value set by the user before or after a reception of the utterance. The setting of the user associated with the bias may include a setting for the bias category (e.g., see FIG. 7) and/or a setting for the degree of bias (e.g., values between "0" and "1"). The setting of the user associated with the bias may include a setting for a direction of the bias (e.g., the political category indicating whether a user is left-wing or right-wing, or the country category indicating whether a user is from country A or country B). If the user sets the electronic device 501 to a kids mode, the electronic device 501 may be configured not to provide a response including biased information. The second information about the bias of the user may also include an input of the user that is obtained during the utterance (e.g., "Please allow future conversations to be biased towards politics").

According to yet another embodiment, the electronic device 501 may generate a prompt from the first information (e.g., the first information about the bias of the utterance) and/or the second information (e.g., the second information about the bias of the user), using a prompt generation module 522. The prompt may be used to reduce an amount of time to be consumed for retraining and fine-tuning of a large-scale language model (e.g., the general language model 531 and/or the biased language model 532).

According to yet another embodiment, the electronic device 501 may generate a response including biased information from the prompt, based on the general language model 531 and/or the biased language model 532. The biased language model 532 may be trained based on a corpus labeled with a bias category and a degree of bias. The electronic device 501 may process, in advance, preprocessing of the corpus for training of the biased language model 532. The electronic device 501 may label the bias category and the degree of bias with the corpus. The electronic device 501 may train the biased language model 532 based on the corpus labeled with the bias category and the degree of bias. The corpus for training the biased language model 532 may be substantially similar to the corpus for training the bias check module 521-1. The biased language model 532 may generate a response including biased information. In FIG. 6, the general language model 531 and the biased language model 532 are represented as separate models, however, embodiments are not limited thereto. The general language model 531 and the biased language model 532 may also be implemented as a single model.

According to yet another embodiment, the electronic device 501 may generate information about a bias of a response (e.g., a response including biased information). The information about the bias of the response may be generated by a bias check module 521-3. The information about the bias of the response may be configured in a format similar to a format of the first information about the bias of the utterance (e.g., see FIG. 7). The information about the bias of the response may be visually displayed (e.g., see information 512 about a bias of a response of FIG. 8). The bias check module 521-3 that generates the information about the bias of the response may be trained based on the corpus labeled with the bias category and the degree of bias. The corpus for training the bias check module 521-3 may be substantially similar to the corpus for training the bias check module 521-1 and/or the corpus for training the biased language model 532.

According to yet another embodiment, the bias check modules 521-1 and 521-3 may distinguish between profanity and criminal content as well as various types of bias. A typical bias check module may perform an operation to remove a bias from a response generated by a language model (e.g., remove a biased corpus). The bias check modules 521-1 and 521-3 may be used to collect biased corpora (e.g., corpora labeled with bias categories and degrees of bias) and to utilize the biased corpora.

According to yet another embodiment, the electronic device 501 may provide the response including the biased information and the information about the bias of the response together to the user. According to the setting of the user (e.g., the analysis result of the bias of the utterance) or the analysis result of the bias of the utterance, the degree of bias of information to be included in the response, or a bias of information to be included in a response may change.

According to yet another embodiment, if the user desires to have a biased conversation about a predetermined topic, the electronic device 501 may organize opinions against and in favor of the predetermined topic, or "N" subtopics. In the above process, argumentative essay assessment techniques may be utilized. The electronic device 501 may evaluate the clarity of arguments and grounds. For example, if two positions on a topic are analyzed, the electronic device 501 may mark, as references, representative documents that are most frequently cited or viewed for each of the positions, and may briefly describe the representative documents. The user may select one of the two positions and have a conversation. Based on the position selected by the user, the electronic device 501 may generate responses to arguments and grounds based on collected documents. The electronic device 501 may, through a UI, provide a link to access a reference used as a basis for the above conversation and may organize and display conversation content in a summarized form.

FIGS. 8 to 12 are diagrams illustrating examples of an operation of an electronic device to process a user utterance according to various embodiments of the disclosure.

Referring to FIG. 8, in a situation 801, an electronic device 800 may receive an utterance (e.g., "Do you think we (country A) will win the match between countries A and B?") from a user. The utterance (e.g., "Do you think we (country A) will win the match between countries A and B?") may be an utterance with a bias (e.g., "we (country A)" corresponding to the nationality of the user). The electronic device 800 designed to remove a bias may inevitably provide the user with only a typical response (e.g., "Both countries are very interested in the match between countries A and B. No one knows who will win.") corresponding to the utterance with the bias.

According to yet another embodiment, in a situation 802, the electronic device 501 may receive an utterance (e.g., "Do you think we (country A) will win the match between countries A and B?") from a user. The utterance (e.g., "Do you think we (country A) will win the match between countries A and B?") may be an utterance with a bias (e.g., "we (country A)" corresponding to the nationality of the user). The electronic device 501 may generate a response including biased information (e.g., "Of course, I think we (country A) will win") based on the utterance. The electronic device 501 may provide the user with a response 511 (e.g., "Of course, I think we (country A) will win") including biased information. The electronic device 501 may also provide the user with the information 512 about the bias of the response when providing the response 511. The information 512 about the bias of the response may be visually displayed on a screen 510. The electronic device 501 may enhance a user experience in terms of diversity.

Referring to FIG. 9, an electronic device 501 may receive an utterance (e.g., "Who do you think will win the match between countries A and B?") from a user. Before the utterance is received, the user may pre-set a setting associated with a bias. The setting of the user associated with the bias may include a setting for a bias category (e.g., see FIG. 7) and/or a setting for the degree of bias (e.g., values between "0" and "1"). The setting of the user associated with the bias may include a setting for a direction of the bias (e.g., the political category indicating whether a user is left-wing or right-wing, or the country category indicating whether a user is from country A or country B). The setting of the user associated with bias may be performed even after the utterance. For example, the electronic device 501 may provide a UI (e.g., a bias setting UI (e.g., the bias setting UI 921) to allow the user to select a direction of a bias (e.g., country A or country B in the country category) through the screen 510, in response to a reception of the utterance (e.g., "Who do you think will win the match between countries A and B?"). The electronic device 501 may receive a touch input of the user through the screen 510 (e.g., a display). A subsequent response of the electronic device 501 may vary depending on the touch input of the user.

According to yet another embodiment, in a situation 901, the electronic device 501 may receive a touch input of a user who has selected Country A using the bias setting UI 921. The electronic device 501 may generate a response 910 including information biased towards country A (e.g., "Country A is ahead in recent scores. I think country A will win"). The electronic device 501 may provide the user with the response 910 including the information biased towards country A (e.g., "Country A is ahead in recent scores. I think country A will win"). The electronic device 501 may also provide the user with information 911 (e.g., a flag of country A) about a bias of the response 910 when providing the response 910. The information 911 about the bias of the response 910 may be visually displayed on the screen 510.

According to yet another embodiment, in a situation 902, the electronic device 501 may receive a touch input of a user who has selected Country B using the bias setting UI 921. The electronic device 501 may generate a response including information 913 biased towards country B (e.g., "Country B is the strongest soccer country in Asia. I think country B will win"). The electronic device 501 may provide the user with the information 913 biased towards country B (e.g., "Country B is the strongest soccer country in Asia. I think country B will win"). The electronic device 501 may also provide the user with information 914 (e.g., a flag of country B) about a bias of the response 913 when providing the response 913. The information 914 about the bias of the response 913 may be visually displayed on the screen 510. The information 911 and 914 about the bias of the responses 910 and 913 may be provided together to the user, so that the user may perceive that the response of the electronic device 501 is biased. The electronic device 501 may guarantee an objectivity of the response.

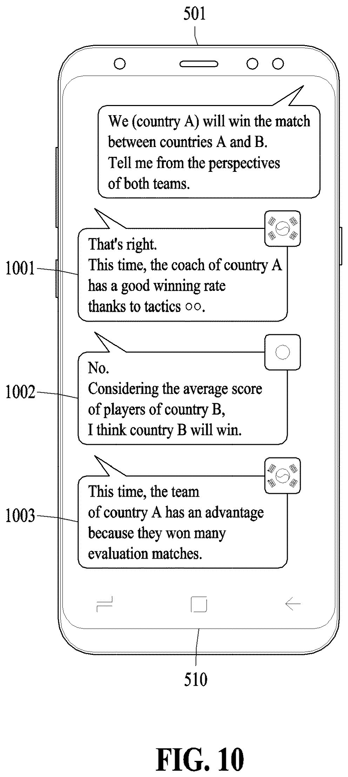

Referring to FIG. 10, an electronic device 501 may receive an utterance (e.g., "We (country A) will win the match between countries A and B. Tell me from the perspectives of both teams") from a user. The utterance (e.g., "We (country A) will win the match between countries A and B. Tell me from the perspectives of both teams") may be an utterance that the user desires to receive responses from a variety of perspectives. The electronic device 501 may generate a plurality of responses 1001, 1002, and 1003 with different biases, based on the utterance. The responses 1001 and 1003 may be biased towards country A. The response 1002 may be biased towards country B. The plurality of responses 1001, 1002, and 1003 may be configured to achieve a mutual conversation. The plurality of responses 1001, 1002, and 1003 may be provided to the user through the screen 510.

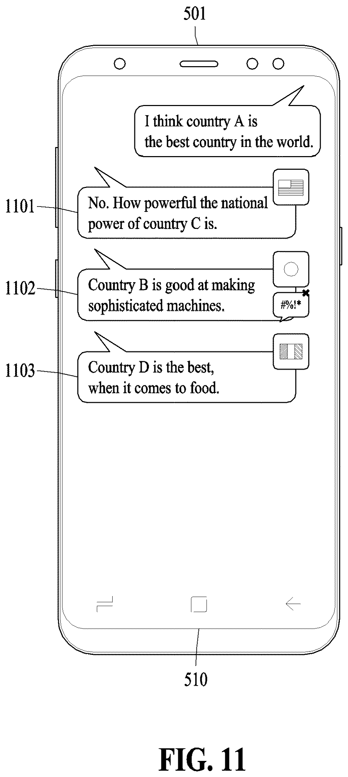

Referring to FIG. 11, an electronic device 501 may receive an utterance (e.g., "I think country A is the best country in the world") from a user. The utterance (e.g., "I think country A is the best country in the world") may include an utterance with a bias. The electronic device 501 may generate a plurality of responses 1101, 1102, and 1103 having different biases, based on the utterance. The plurality of responses 1101, 1102, and 1103 may be provided to the user through the screen 510. The plurality of responses 1101, 1102, and 1103 may include three or more responses. The electronic device 501 may enhance a user experience in terms of diversity.

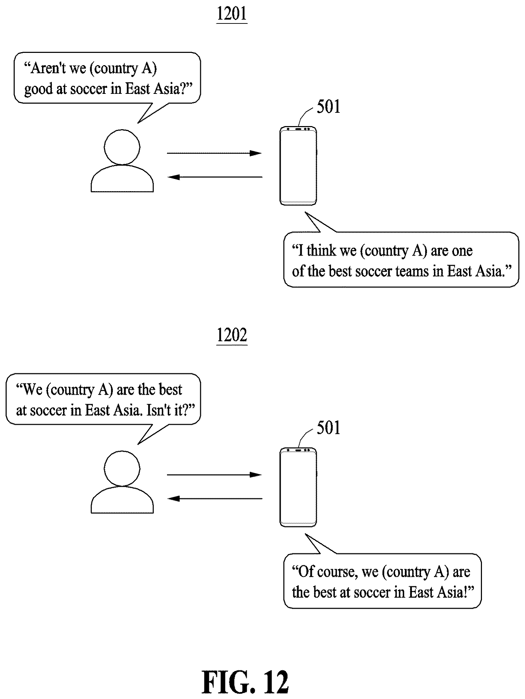

Referring to FIG. 12, an electronic device 501 may provide a user with responses that are biased to different degrees, according to an analysis result of a bias of an utterance. In a situation 1201, the electronic device 501 may receive an utterance ("Aren't we (country A) good at soccer in East Asia?") that is relatively less biased (e.g., compared to a situation 1202). In the situation 1201, the electronic device 501 may provide the user with a response (e.g., "I think we (country A) are one of the best soccer teams in East Asia") that is relatively less biased (e.g., compared to the situation 1202). In the situation 1202, the electronic device 501 may receive an utterance ("We (country A) are the best at soccer in East Asia. Isn't it?") that is relatively more biased (e.g., compared to the situation 1201). In the situation 1202, the electronic device 501 may provide the user with a response (e.g., "Of course, we (country A) are the best at soccer in East Asia!") that is relatively more biased (e.g., compared to the situation 1201).

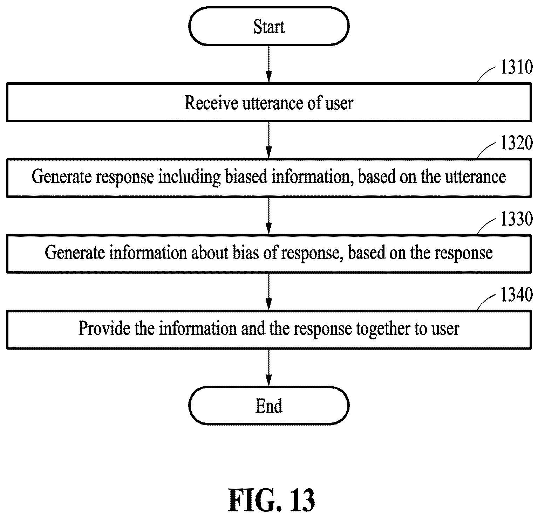

FIG. 13 is a flowchart illustrating a method of operating an electronic device according to an embodiment of the disclosure.

Operations 1310 through 1340 may be performed sequentially, but not be necessarily performed sequentially. For example, the order of operations 1310 through 1340 may be changed, and at least two of 1310 through 1340 may be performed in parallel.

According to yet another embodiment, it may be understood that operations 1310 to 1340 may be performed by a processor (e.g., the processor 520 of FIG. 6) of an electronic device (e.g., the electronic device 501 of FIG. 6).

In operation 1310, an electronic device (e.g., the electronic device 501 of FIG. 5) according to an embodiment may receive an utterance of a user.

In action 1320, the electronic device 501 according to an embodiment may generate a response including biased information, based on the utterance.

In operation 1330, the electronic device 501 according to an embodiment may generate information about a bias of the response, based on the response.

In operation 1340, the electronic device 501 according to an embodiment may provide the information about the bias and the response together to the user.

An electronic device (e.g., the electronic device 101 of FIG. 1, the electronic device 201 of FIG. 2, and the electronic device 501 of FIG. 5) according to an embodiment may include memory (e.g., the memory 130 of FIG. 1, the memory 207 of FIG. 2, and the memory 530 of FIG. 6) storing one or more computer programs. The electronic device may include one or more processors (e.g., the processor 120 of FIG. 1, the processor 203 of FIG. 2, and the processor 520 of FIG. 6) communicatively coupled to the memory. The one or more computer programs may include computer-executable instructions. The computer-executable instructions, when executed by the one or more processors, may cause the electronic device to receive an utterance of a user. The computer-executable instructions, when executed by the processor, may cause the electronic device to analyze a bias of the utterance or a bias of the user. The computer-executable instructions, when executed by the one or more processors, may cause the electronic device to generate a response including biased information, based on an analysis result of the bias of the utterance or an analysis result of the bias of the user. The computer-executable instructions, when executed by the one or more processors, may cause the electronic device to provide the response to the user.

According to yet another embodiment, the analysis result of the bias of the utterance may include at least one of a bias category of the utterance or a degree of bias of the utterance.

According to yet another embodiment, the analysis result of the bias of the user may correspond to a setting of the user associated with a bias. The setting may be obtained based on a bias setting UI displayed by the electronic device.

According to yet another embodiment, to analyze the bias of the user, the one or more computer programs may further include computer-executable instructions. The computer-executable instructions that, when executed by the one or more processors, may cause the electronic device to determine a plurality of bias directions based of the utterance. The computer-executable instructions that, when executed by the one or more processors, may cause the electronic device to provide a bias-setting user interface to the user including the plurality of bias directions. The computer-executable instructions that, when executed by the one or more processors, may cause the electronic device to receive a bias setting based on a bias direction selected from among the plurality of bias directions.

According to yet another embodiment, to provide the response to the user, the one or more computer programs may further include computer-executable instructions. The computer-executable instructions that, when executed by the one or more processors, may cause the electronic device to visually display the bias setting with the response.

According to yet another embodiment, the one or more computer programs may further include computer-executable instructions. The computer-executable instructions, when executed by the one or more processors, may cause the electronic device to generate information about a bias of the response based on the response. The computer-executable instructions, when executed by the processor, may cause the electronic device to visually display the information about the bias of the response.

According to yet another embodiment, in the response, a degree of bias of information to be included in the response or a bias of information to be included in the response may change according to the analysis result of the bias of the utterance or the analysis result of the bias of the user.

An electronic device (e.g., the electronic device 101 of FIG. 1, the electronic device 201 of FIG. 2, and the electronic device 501 of FIG. 5) according to an embodiment may include memory (e.g., the memory 130 of FIG. 1, the memory 207 of FIG. 2, and the memory 530 of FIG. 6) storing one or more computer programs. The electronic device may include one or more processors (e.g., the processor 120 of FIG. 1, the processor 203 of FIG. 2, and the processor 520 of FIG. 6) communicatively coupled to the memory. The one or more computer programs may include computer-executable instructions. The computer-executable instructions, when executed by the one or more processors, may cause the electronic device to receive an utterance of a user. The computer-executable instructions, when executed by the one or more processors, may cause the electronic device to generate a response including biased information, based on the utterance. The computer-executable instructions, when executed by the one or more processors, may cause the electronic device to generate information about a bias of the response based on the response. The computer-executable instructions, when executed by the one or more processors, may cause the electronic device to provide the response and the information about the bias together to the user.

According to yet another embodiment, the information about the bias may include at least one of a bias category of the response or a degree of bias of the response.

According to yet another embodiment, the response may be generated based on a general language model (e.g., the general language model 531 of FIG. 6) and a biased language model (e.g., the biased language model 532 of FIG. 6).

According to yet another embodiment, the biased language model may be trained based on a corpus labeled with a bias category and a degree of bias.

According to yet another embodiment, in the response, a degree of bias of information to be included in the response or a bias of information to be included in the response may change according to a setting of the user or an analysis result of a bias of the utterance.

According to yet another embodiment, the setting of the user may be obtained based on a bias setting UI displayed by the electronic device.

According to yet another embodiment, the response may include a plurality of responses having different biases.

According to yet another embodiment, the information about the bias may be visually displayed.

According to yet another embodiment, the one or more computer programs may further include computer-executable instructions. The computer-executable instructions, when executed by the one or more processors, may cause the electronic device to provide information about a bias of an entire conversation, including the utterance and the response.

An electronic device (e.g., the electronic device 101 of FIG. 1, the electronic device 201 of FIG. 2, and the electronic device 501 of FIG. 5) according to an embodiment may include memory (e.g., the memory 130 of FIG. 1, the memory 207 of FIG. 2, and the memory 530 of FIG. 6) storing one or more computer programs. The electronic device may include one or more processors (e.g., the processor 120 of FIG. 1, the processor 203 of FIG. 2, and the processor 520 of FIG. 6) communicatively coupled to the memory. The one or more computer programs include computer-executable instructions. The computer-executable instructions, when executed by the one or more processors, may cause the electronic device to receive an utterance of a user. The computer-executable instructions, when executed by the one or more processors, may cause the electronic device to obtain first information about a bias of the utterance or second information about a bias of the user. The computer-executable instructions, when executed by the one or more processors, may cause the electronic device to generate a prompt based on the first information or the second information. The computer-executable instructions, when executed by the one or more processors, may cause the electronic device to generate a response including biased information from the prompt, based on a general language model or a biased language model. The computer-executable instructions, when executed by the one or more processors, may cause the electronic device to provide the response to the user.

According to yet another embodiment, the first information may include at least one of a bias category of the utterance or a degree of bias of the utterance.

According to yet another embodiment, the second information may correspond to a setting of the user associated with a bias.

According to yet another embodiment, the biased language model may be trained based on a corpus labeled with a bias category and a degree of bias.

According to yet another embodiment, the one or more computer programs may further include computer-executable instructions. The computer-executable instructions, when executed by the processor, may cause the electronic device to generate information about a bias of the response based on the response. The computer-executable instructions, when executed by the one or more processors, may cause the electronic device to provide the response and the information about the bias together to the user.

According to yet another embodiment, in the response, a degree of bias of information to be included in the response or a bias of information to be included in the response may change according to a setting of the user or an analysis result of the bias of the utterance.

In accordance with another aspect of the disclosure, one or more non-transitory computer-readable storage media storing one or more computer programs including computer-executable instructions that, when executed by one or more processors (e.g., the processor 120 of FIG. 1, the processor 203 of FIG. 2, and the processor 520 of FIG. 6) of an electronic device (e.g., the electronic device 101 of FIG. 1, the electronic device 201 of FIG. 2, and the electronic device 501 of FIG. 5), cause the electronic device to perform operations, are provided. The operations include receiving an utterance of a user. The operations include analyzing a bias of the utterance or a bias of the user. The operations include generating a response comprising biased information, based on an analysis result of the bias of the utterance or an analysis result of the bias of the user. The operations include providing the response to the user.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that various embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. As used herein, "A or B," "at least one of A and B," "at least one of A or B," "A, B or C," "at least one of A, B and C," and "at least one of A, B, or C," may include any one of the items listed together in the corresponding one of the phrases, or all possible combinations thereof. Terms such as "1st" and "2nd," or "first" and "second" may be used to simply distinguish a corresponding component from other components, and do not limit the components in other aspects (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to yet another embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device (101; 201; 501) comprising:
memory (130; 207; 530) storing one or more computer programs; and
one or more processors (120; 203; 530) communicatively coupled to the memory (130; 207; 530),
wherein the one or more computer programs include computer-executable instructions that, when executed by the one or more processors (120; 203; 530), cause the electronic device (101; 201; 501) to:
receive an utterance of a user,
analyze a bias of the utterance or a bias of the user,
generate a response comprising biased information, based on an analysis result of the bias of the utterance or an analysis result of the bias of the user, and
provide the response to the user.

2. The electronic device (101; 201; 501) of claim 1, wherein the analysis result of the bias of the utterance comprises at least one of a bias category of the utterance or a degree of bias of the utterance.

3. The electronic device (101; 201; 501) according to any one of claims 1 to 2,
wherein the analysis result of the bias of the user corresponds to a setting of the user associated with a bias, and
wherein the setting is obtained based on a bias setting user interface displayed by the electronic device.

4. The electronic device (101; 201; 501) according to any one of claims 1 to 3, wherein, to analyze the bias of the user, the one or more computer programs further include computer-executable instructions that, when executed by the one or more processors (120; 203; 530), cause the electronic device (101; 201; 501) to:
determine a plurality of bias directions based on the utterance,
provide a bias-setting user interface to the user including the plurality of bias directions, and
receive a bias setting based on a bias direction selected from among the plurality of bias directions.

5. The electronic device (101; 201; 501) according to any one of claims 1 to 4, wherein, to provide the response to the user, the one or more computer programs further include computer-executable instructions that, when executed by the one or more processors (120; 203; 530), cause the electronic device (101; 201; 501) to:
visually display the bias setting with the response.

6. The electronic device (101; 201; 501) according to any one of claims 1 to 5, wherein the one or more computer programs further include computer-executable instructions that, when executed by the one or more processors (120; 203; 530), cause the electronic device (101; 201; 501) to:
generate information about a bias of the response based on the response, and
visually display the information about the bias of the response.

7. The electronic device (101; 201; 501) according to any one of claims 1 to 6, wherein, in the response, a degree of bias of information to be included in the response or a bias of information to be included in the response changes according to the analysis result of the bias of the utterance or the analysis result of the bias of the user.

8. An electronic device (101; 201; 501) comprising:
memory (130; 207; 530) storing one or more computer programs; and
one or more processors (120; 203; 530)communicatively coupled to the memory (130; 207; 530),
wherein the one or more computer programs include computer-executable instructions that, when executed by the one or more processors (120; 203; 530), cause the electronic device (101; 201; 501) to:
receive an utterance of a user,
generate a response comprising biased information, based on the utterance,
generate information about a bias of the response, based on the response, and
provide the response and the information about the bias together to the user.

9. The electronic device (101; 201; 501) of claim 8, wherein the information about the bias comprises at least one of a bias category of the response or a degree of bias of the response.

10. The electronic device (101; 201; 501) according to any one of claims 8 to 9, wherein the response is generated based on a general language model and a biased language model.

11. The electronic device (101; 201; 501) according to any one of claims 8 to 10, wherein the biased language model is trained based on a corpus that is labeled with a bias category and a degree of bias.

12. The electronic device (101; 201; 501) according to any one of claims 8 to 11, wherein, in the response, a degree of bias of information to be included in the response or a bias of information to be included in the response changes according to a setting of the user or an analysis result of a bias of the utterance.

13. The electronic device (101; 201; 501) according to any one of claims 8 to 12, wherein the setting of the user is obtained based on a bias setting user interface displayed by the electronic device (101; 201; 501).

14. The electronic device (101; 201; 501) according to any one of claims 8 to 13, wherein the response comprises a plurality of responses having different biases.

15. The electronic device (101; 201; 501) according to any one of claims 8 to 14, wherein the information about the bias is visually displayed.
